(19) Europäisches Patentamt
European Patent Office
Office européen des brevets

(11) **EP 4 475 013 A1**

(12) **EUROPEAN PATENT APPLICATION**
published in accordance with Art. 153(4) EPC

(43) Date of publication:
**11.12.2024 Bulletin 2024/50**

(51) International Patent Classification (IPC):
***G06F 18/25*** (2023.01)

(21) Application number: **23762762.5**

(86) International application number:
**PCT/CN2023/077191**

(22) Date of filing: **20.02.2023**

(87) International publication number:
**WO 2023/165361 (07.09.2023 Gazette 2023/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.03.2022 CN 202210203516**

(71) Applicant: **Huawei Technologies Co., Ltd.
Shenzhen, Guangdong 518129 (CN)**

(72) Inventors:
• **CHEN, Xinghao**
Shenzhen, Guangdong 518129 (CN)
• **WANG, Yikai**
Shenzhen, Guangdong 518129 (CN)
• **WANG, Xiudong**
Shenzhen, Guangdong 518129 (CN)
• **WANG, Yunhe**
Shenzhen, Guangdong 518129 (CN)

(74) Representative: **Pfenning, Meinig & Partner mbB
Patent- und Rechtsanwälte
Theresienhöhe 11a
80339 München (DE)**

(54) **DATA PROCESSING METHOD AND RELATED DEVICE**

(57) Embodiments of this application disclose a data processing method. The method is used in a multimodal fusion scenario, and the method includes: obtaining first data and second data, where modalities of the first data and the second data are different; obtaining a first feature set of the first data and a second feature set of the second data; replacing a first target feature in the first feature set with a second target feature in the second feature set, to obtain a third feature set, where the second target feature corresponds to the first target feature; and obtaining a data feature based on the third feature set and the second feature set, where the data feature is used to implement a computer vision task. Information of different modal data can be efficiently fused by replacing features between different modal data, so that the obtained data feature has a multimodal data feature, and an expression capability of the data feature is improved.

FIG. 4

## Description

This application claims priority to Chinese Patent Application No. 202210203516.0, filed with the China National Intellectual Property Administration on March 2, 2022 and entitled "DATA PROCESSING METHOD AND RELATED DEVICE", which is incorporated herein by reference in its entirety.

## TECHNICAL FIELD

Embodiments of this application relate to the field of artificial intelligence, and in particular, to a data processing method and a related device.

## BACKGROUND

Artificial intelligence (artificial intelligence, AI) is a theory, a method, a technology, or an application system that simulates, extends, and expands human intelligence by using a digital computer or a machine controlled by a digital computer, to sense an environment, obtain knowledge, and obtain an optimal result based on the knowledge. In other words, the artificial intelligence is a branch of computer science, and is intended to understand the essence of intelligence and produce a new intelligent machine that can react in a manner similar to human intelligence. The artificial intelligence is to study design principles and implementation methods of various intelligent machines, so that the machines have perceiving, inference, and decision-making functions. Researches in the field of artificial intelligence include a robot, natural language processing, computer vision, decision-making and inference, human-computer interaction, recommendation and search, an AI basic theory, and the like.

For different modal data, for example, a text, a picture, a video, and an audio, that has different levels of knowledge representation in different degrees, it needs to study feature representation and learning methods of different modal information to implement multimodal data collaborative representation. In the era of deep learning, a multimodal feature fusion technology is more important. For example, a perception system of a self-driving vehicle has been greatly improved. To obtain a more robust and accurate perception result, a vehicle with assisted driving or self-driving functions usually needs to be equipped with different sensors that complement each other under different operating conditions. Typical sensor modalities include a camera, a radar, a laser radar, a high- definition map, and the like.

Currently, a policy used by multimodal fusion is to combine inputs of different modalities and input the inputs into a same transformer structure to obtain a final output.

However, the policy used by the foregoing multimodal fusion is only to simply combine the inputs, and is not applicable to all multimodal fusion scenarios.

## SUMMARY

Embodiments of this application provide a data processing method and a related device. Information of different modal data can be efficiently fused by replacing features between different modal data, so that an obtained data feature has a multimodal data feature, and an expression capability of the data feature is improved.

A first aspect of embodiments of this application provides a data processing method. The method is used in a multimodal fusion scenario, and the method includes: obtaining first data and second data, where modalities of the first data and the second data are different; obtaining a first feature set of the first data and a second feature set of the second data; replacing a first target feature in the first feature set with a second target feature in the second feature set, to obtain a third feature set, where the second target feature corresponds to the first target feature; and obtaining a data feature based on the third feature set and the second feature set, where the data feature is used to implement a computer vision task. A correspondence between the second target feature and the first target feature may be determined based on a spatial relationship, a semantic relationship, or the like between the first data and the second data, or may be determined based on locations of features in feature sets, or the like. A specific manner of determining a correspondence between features in different feature sets is not limited herein.

In embodiments of this application, information of different modal data can be efficiently fused by replacing features between different modal data, so that the obtained data feature has a multimodal data feature, and an expression capability of the data feature is improved.

Optionally, in a possible implementation of the first aspect, the step of obtaining a data feature based on the third feature set and the second feature set includes: replacing a fourth target feature in the second feature set with a third target feature in the first feature set, to obtain a fourth feature set, where the third target feature corresponds to the fourth target feature; and obtaining the data feature based on the third feature set and the fourth feature set.

In this possible implementation, not only the first target feature is replaced with the second target feature, but also the fourth target feature may be replaced with the third target feature, to exchange features between the first feature set and the second feature set. This may enable the third feature set to have a feature in modal data corresponding to the second feature set, and may further enable the fourth feature set to have a feature in modal data corresponding to the first feature set. This improves the expression capability of the data feature that is subsequently generated based on the third feature set and the fourth feature set, and improves accuracy and/or precision of a subsequently obtained result of the computer vision task.

Optionally, in a possible implementation of the first aspect, before the step of replacing a first target feature in the first feature set with a second target feature in the second feature set, the method further includes: obtaining a first score set of the first feature set, where a first feature in the first feature set one-to-one corresponds to a first score in the first score set; obtaining a second score set of the second feature set, where a second feature in the second feature set one-to-one corresponds to a second score in the second score set; and determining the second target feature based on the first score set and/or the second score set.

In this possible implementation, the second target feature or the first target feature is determined by introducing the score of the feature. The score may be an indicator (for example, a larger score is better) used to determine feature importance, or may be an indicator (for example, a smaller score is better) used to evaluate feature invalidity. In this manner, an unimportant feature in one piece of modal data may be replaced with an important feature in another piece of modal data. In this way, representation of the modal data by a feature set including the replaced feature is improved.

Optionally, in a possible implementation of the first aspect, the foregoing step of obtaining a first score set of the first feature set includes: evaluating each feature in the first feature set by using a scoring network, to obtain the first score set, where the scoring network is used to evaluate the feature importance. The foregoing step of obtaining a second score set of the second feature set includes: evaluating each feature in the second feature set by using the scoring network, to obtain the second score set.

In this possible implementation, the scoring network is introduced to evaluate the feature importance, so that the second target feature and the first target feature that are subsequently determined are more reasonable.

Optionally, in a possible implementation of the first aspect, output values of the scoring network conform to sparse distribution. To be specific, it may be understood that the output value of the scoring network is more sparse, so that scores of some features differ greatly from scores of other features, and further, useful features or useless features are determined. For example, the scoring network may be trained by using an L1 norm in a training process.

In this possible implementation, the scores of the some features differ greatly from the scores of the other features, and further, the useful features or the useless features are determined.

Optionally, in a possible implementation of the first aspect, the foregoing step of obtaining a first score set of the first feature set includes: performing a mathematical operation on each first feature in the first feature set, to obtain the first score set, where the mathematical operation is an operation performed based on each first feature, and the mathematical operation includes a rank operation or a modulo operation. The foregoing step of obtaining a second score set of the second feature set includes: performing the mathematical operation on each second feature in the second feature set, to obtain the second score set.

In this possible implementation, an overall network structure is simplified by using the mathematical operation on the feature, and by reducing introduction of another structure for a determining score.

Optionally, in a possible implementation of the first aspect, the step of obtaining a first feature set of the first data and a second feature set of the second data includes: obtaining the first feature set and the second feature set by using a neural network, where the neural network includes an attention network, a multi-layer perceptron, a pooling layer, or a convolutional layer.

In this possible implementation, the first feature set and the second feature set are obtained by using the neural network, and may be applicable to a scenario like the attention network, the multi-layer perceptron, the pooling layer, or the convolutional layer.

Optionally, in a possible implementation of the first aspect, the step of obtaining the first feature set and the second feature set by using a neural network includes: splitting the first data to obtain a plurality of pieces of first subdata; splitting the second data to obtain a plurality of pieces of second subdata; and inputting the plurality of pieces of first subdata and the plurality of pieces of second subdata into the neural network, to obtain the first feature set and the second feature set.

In this possible implementation, an input of the neural network is obtained by splitting the modal data, so that a quantity of features in a subsequently obtained feature set is related to a quantity obtained through splitting, and a subsequent calculation process is controlled.

Optionally, in a possible implementation of the first aspect, the step of replacing a first target feature in the first feature set with a second target feature in the second feature set includes: replacing the first target feature with the second target feature through residual location coding, where the residual location coding is used to determine a location of each feature in the first feature set and a location of each feature in the second feature set.

In this possible implementation, a location of a replaced feature is determined through residual location coding, to ensure that the location of the feature in an original feature set is not changed when the feature is replaced.

Optionally, in a possible implementation of the first aspect, the neural network further includes a first network layer, and a structure of the first network layer is related to the neural network.

In this possible implementation, the first feature set and the second feature set may be outputs of the first network layer. In other words, no matter where the first feature set and the second feature set belong in the neural network, the expression capability of the subsequent data feature can be improved by replacing the features between different modal data.

Optionally, in a possible implementation of the first aspect, the foregoing step further includes: inputting the data feature into a second network layer, to obtain the result of the computer vision task, where the second network layer is related to the computer vision task.

In this possible implementation, the result of the computer vision task may be obtained by using the second network layer for the data feature. Because the data feature is obtained by replacing the features between different modal data, the result is more accurate.

Optionally, in a possible implementation of the first aspect, the computer vision task is a classification task, and the second network layer is a fully connected layer; or the computer vision task is a segmentation task or a detection task, and the second network layer is a convolutional neural network layer or an upsampling layer.

In this possible implementation, the method may be used in computer vision tasks in different scenarios, and may accurately complete the detection task, the segmentation task, the classification task, or the like.

A second aspect of embodiments of this application provides a data processing device. The data processing device is used in a multimodal fusion scenario, and the data processing device includes: an obtaining unit, configured to obtain first data and second data, where modalities of the first data and the second data are different, where the obtaining unit is further configured to obtain a first feature set of the first data and a second feature set of the second data; and a replacement unit, configured to replace a first target feature in the first feature set with a second target feature in the second feature set, to obtain a third feature set, where the second target feature corresponds to the first target feature, where the obtaining unit is configured to obtain a data feature based on the third feature set and the second feature set, where the data feature is used to implement a computer vision task.

Optionally, in a possible implementation of the second aspect, the obtaining unit is specifically configured to replace a fourth target feature in the second feature set with a third target feature in the first feature set, to obtain a fourth feature set, where the third target feature corresponds to the fourth target feature. The obtaining unit is specifically configured to obtain the data feature based on the third feature set and the fourth feature set.

Optionally, in a possible implementation of the second aspect, the obtaining unit is further configured to obtain a first score set of the first feature set, where a first feature in the first feature set one-to-one corresponds to a first score in the first score set. The obtaining unit is further configured to obtain a second score set of the second feature set, where a second feature in the second feature set one-to-one corresponds to a second score in the second score set. The data processing device further includes a determining unit, configured to determine the second target feature based on the first score set and/or the second score set.

Optionally, in a possible implementation of the second aspect, the obtaining unit is specifically configured to evaluate each feature in the first feature set by using a scoring network, to obtain the first score set, where the scoring network is used to evaluate feature importance. The obtaining unit is specifically configured to evaluate each feature in the second feature set by using the scoring network, to obtain the second score set.

Optionally, in a possible implementation of the second aspect, output values of the scoring network conform to sparse distribution.

Optionally, in a possible implementation of the second aspect, the obtaining unit is specifically configured to perform a mathematical operation on each first feature in the first feature set, to obtain the first score set, where the mathematical operation is an operation performed based on each first feature, and the mathematical operation includes a rank operation or a modulo operation. The obtaining unit is specifically configured to perform the mathematical operation on each second feature in the second feature set, to obtain the second score set.

Optionally, in a possible implementation of the second aspect, the obtaining unit is specifically configured to obtain the first feature set and the second feature set by using a neural network, where the neural network includes an attention network, a multi-layer perceptron, a pooling layer, or a convolutional layer.

Optionally, in a possible implementation of the second aspect, the obtaining unit is specifically configured to split the first data to obtain a plurality of pieces of first subdata. The obtaining unit is specifically configured to split the second data to obtain a plurality of pieces of second subdata. The obtaining unit is specifically configured to input the plurality of pieces of first subdata and the plurality of pieces of second subdata into the neural network, to obtain the first feature set and the second feature set.

Optionally, in a possible implementation of the second aspect, the replacement unit is specifically configured to replace the first target feature with the second target feature through residual location coding, where the residual location coding is used to determine a location of each feature in the first feature set and a location of each feature in the second feature set.

Optionally, in a possible implementation of the second aspect, the neural network further includes a first network layer, and a structure of the first network layer is related to the neural network.

Optionally, in a possible implementation of the second aspect, the obtaining unit is further configured to input the data feature into a second network layer, to obtain a result of the computer vision task, where the second network layer is related to the computer vision task.

Optionally, in a possible implementation of the second aspect, the computer vision task is a classification task, and the second network layer is a fully connected layer; or the computer vision task is a segmentation task or a detection task, and the second network layer is a convolutional neural network layer or an upsampling layer.

A third aspect of embodiments of this application provides a data processing device, including a processor. The processor is coupled to a memory. The memory is configured to store a program or instructions. When the program or the instructions are executed by the processor, the data processing device is enabled to implement the method according to the first aspect or any possible implementation of the first aspect.

A fourth aspect of embodiments of this application provides a computer-readable medium. The computer-readable medium stores a computer program or instructions. When the computer program or the instructions are run on a computer, the computer is enabled to perform the method according to the first aspect or any possible implementation of the first aspect.

A fifth aspect of embodiments of this application provides a computer program product. When the computer program product is executed on a computer, the computer is enabled to perform the method according to the first aspect or any possible implementation of the first aspect.

For technical effects brought by the second aspect, the third aspect, the fourth aspect, the fifth aspect, or any possible implementation thereof, refer to technical effects brought by the first aspect or different possible implementations of the first aspect. Details are not described herein again.

It can be learned from the foregoing technical solutions that embodiments of this application have the following advantages: the information of different modal data can be efficiently fused by replacing the features between different modal data, so that the obtained data feature has the multimodal data feature, and the expression capability of the data feature is improved.

**BRIEF DESCRIPTION OF DRAWINGS**

FIG. 1 is a schematic diagram of a structure of a system architecture according to an embodiment of this application;
FIG. 2 is a schematic diagram of a hardware structure of a chip according to an embodiment of this application;
FIG. 3A is a schematic diagram of a structure of a data processing system according to an embodiment of this application;
FIG. 3B is a schematic diagram of another structure of a data processing system according to an embodiment of this application;
FIG. 4 is a schematic flowchart of a data processing method according to an embodiment of this application;
FIG. 5A is an example diagram of first data according to an embodiment of this application;
FIG. 5B is an example diagram of second data according to an embodiment of this application;
FIG. 6A is another example diagram of first data according to an embodiment of this application;
FIG. 6B is another example diagram of second data according to an embodiment of this application;
FIG. 7A is an example diagram of first data according to an embodiment of this application;
FIG. 7B is an example diagram of second data according to an embodiment of this application;
FIG. 8A is another example diagram of first data according to an embodiment of this application;
FIG. 8B is another example diagram of second data according to an embodiment of this application;
FIG. 9 shows several example diagrams of a neural network according to an embodiment of this application;
FIG. 10A is an example diagram of a location of a feature set in a neural network according to an embodiment of this application;
FIG. 10B is another example diagram of a location of a feature set in a neural network according to an embodiment of this application;
FIG. 11 is an example flowchart of a data processing method according to an embodiment of this application;
FIG. 12 is another example flowchart of a data processing method according to an embodiment of this application;
FIG. 13 is a schematic diagram of a structure of a data processing device according to an embodiment of this application; and
FIG. 14 is a schematic diagram of another structure of a data processing device according to an embodiment of this application.

## DESCRIPTION OF EMBODIMENTS

Embodiments of this application provide a data processing method and a related device. Information of different modal data can be efficiently fused by replacing features between different modal data, so that an obtained data feature has a multimodal data feature, and an expression capability of the data feature is improved.

Multimodal fusion (multimodal fusion) combines information of a plurality of modalities for target prediction (classification or regression), and is one of earliest research directions of MMML and is a most widely used direction. The multimodal fusion also has another common name, for example, multi-source information fusion (multi-source information fusion) and multi-sensor fusion (multi-sensor fusion). In the era of deep learning, a multimodal feature fusion technology is more important. For example, a perception system of a self-driving vehicle has been greatly improved. To obtain a more robust and accurate perception result, a vehicle with assisted driving or self-driving functions usually needs to be equipped with different sensors that complement each other under different operating conditions. Typical sensor modalities include a camera, a radar, a laser radar, a high- definition map, and the like. Currently, a policy used by the multimodal fusion is to combine inputs of different modalities and input the inputs into a same transformer structure to obtain a final output.

However, the policy used by the foregoing multimodal fusion is only to simply combine the inputs, and is not applicable to all multimodal fusion scenarios.

To resolve the foregoing technical problem, embodiments of this application provide a data processing method. In one aspect, a transformer structure is used in a lane line detection task, so that a long-range relationship between lane lines can be effectively modeled. In another aspect, a scenario perception capability can be improved by adding detection box location information of an object in an image to a lane line detection process. This reduces misjudgment when a lane line is blocked by a vehicle. The following describes in detail the data processing method and the related device in embodiments of this application with reference to the accompanying drawings.

For ease of understanding, mainly related terms and concepts in embodiments of this application are first described below.

1. Neural network

The neural network may include neurons. The neuron may be an operation unit that uses $X_s$ and an intercept of 1 as an input. An output of the operation unit may be as follows:

$$h_{W,b}(x) = f(W^T x) = f\left(\sum_{s=1}^{n} W_s x_s + b\right),$$

where
s = 1, 2, ..., or n, n is a natural number greater than 1, $W_s$ is a weight of $X_s$, and b is bias of the neuron. f is an activation function (activation function) of the neuron, used to introduce a non-linear feature into the neural network, to convert an input signal in the neuron into an output signal. The output signal of the activation function may serve as an input of a next convolutional layer. The activation function may be a Relu function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

Work of each layer in the neural network may be described by using a mathematical expression $y = a(Wx+b)$. From a physical perspective, the work of each layer in the neural network may be understood as completing transformation from input space to output space (that is, from row space to column space of a matrix) by performing five operations on the input space (a set of input vectors). The five operations include: 1. dimension increase/dimension reduction; 2. scaling up/scaling down; 3. rotation; 4. translation; and 5. "bending". The operations 1, 2, and 3 are completed by $Wx$, the operation 4 is completed by $+b$, and the operation 5 is implemented by $a()$. The word "space" is used herein for expression because a classified object is not a single thing, but a type of things. Space refers to a collection of all individuals of such type of things. $W$ is a weight vector, and each value of the vector indicates a weighting value of a neuron at this layer of neural network. The vector $W$ determines space transformation from the input space to the output space described above. In other words, a weight $W$ at each layer controls how to transform space. A purpose of training the neural network is to finally obtain a weight matrix (a weight matrix including vectors $W$ at a plurality of layers) at all layers of a trained neural network. Therefore, a training process for the neural network is essentially a manner of learning control of space transformation, and more specifically, learning a weight matrix.

2. Convolutional neural network

The convolutional neural network (convolutional neural network, CNN) is a deep neural network with a convolutional structure. The convolutional neural network includes a feature extractor including a convolutional layer and a subsampling layer. The feature extractor may be considered as a filter. A convolution process may be considered as performing convolution by using a trainable filter and an input image or a convolution feature plane (feature map). The convolutional layer is a neuron layer that is in the convolutional neural network and at which convolution processing is performed on an input signal. At the convolutional layer of the convolutional neural network, one neuron may be connected to only a part of neurons at a neighboring layer. A convolutional layer usually includes several feature planes, and each feature plane may include some neurons arranged in a rectangle. Neurons of a same feature plane share a weight, and the shared weight herein is a convolution kernel. Weight sharing may be understood as that a picture information extraction manner is irrelevant to a location. A principle implied herein is that statistical information of a part of an image is the same as that of another part. This means that image information learned in a part can also be used in another part. Therefore, the same image information obtained through learning can be used for all locations on the image. At a same convolutional layer, a plurality of convolution kernels may be used to extract different image information. Usually, a larger quantity of convolution kernels indicates richer image information reflected by a convolution operation.

The convolution kernel may be initialized in a form of a random-size matrix. In a process of training the convolutional neural network, the convolution kernel may obtain an appropriate weight through learning. In addition, a direct benefit brought by weight sharing is that connections between layers in the convolutional neural network are reduced and an overfitting risk is lowered.

3. Transformer

A transformer structure is a feature extraction network (different from a convolutional neural network) that includes an encoder and a decoder.

The encoder learns a feature, for example, a feature of a pixel, in a global receptive field in a self-attention manner.

The decoder learns, through self-attention and cross-attention, a feature, for example, a feature of an output box, required by a module.

Attention (which may also be referred to as an attention mechanism) is described below:

The attention mechanism can quickly extract an important feature of sparse data; and the attention mechanism occurs between the encoder and the decoder, or between input of a sentence and generation of a sentence. A self-attention mechanism in a self-attention model occurs in an input sequence, or in an output sequence, a relationship, for example, a syntactic feature (phrase structure), between words that are spaced far away from each other in a same sentence can be extracted. The self-attention mechanism provides an effective modeling manner to capture global context information through QKV It is assumed that an input is Q (query), and a context is stored in a form of a key-value (K-V) pair. The attention mechanism is actually a function of mapping from a query to a series of key-value (key-value) pairs. Nature of an attention function may be described as the mapping from a query (query) to a series of (key-value) pairs. The attention is essentially assigning a weight coefficient to each element in a sequence. This may alternatively be understood as soft addressing. If each element in the sequence is stored in the (K-V) form, the attention completes addressing by calculating a similarity between Q and K. The similarity calculated by using Q and K reflects importance, namely, a weight, of an extracted V value, and a final feature value is obtained through weighted summing.

Calculation of the attention is divided into three steps. A first step is to calculate a similarity between the query and each key to obtain the weight. Common similarity functions are product, concatenation, perceptron, and the like. A second step is usually to use a softmax function (on one hand, normalization may be performed to obtain probability distribution in which a sum of all weight coefficients is one; and on the other hand, weights of important elements may be highlighted by using a feature of the softmax function) to normalize the weights. Finally, the final feature value is obtained by performing weighted summing on the weights and corresponding key values (values). A specific calculation formula may be as follows:

$$Attention\ (Q, K, V)\ = softmax(\frac{QK^T}{\sqrt{d}}) \cdot V,$$

where
d is a dimension of a QK matrix.

In addition, the attention includes the self-attention and the cross-attention, and the self-attention may be understood as special attention, in other words, inputs of the QKV are consistent. However, inputs of the QKV in the cross-attention are inconsistent. The attention is to integrate a queried feature as an updated value of a current feature by using a similarity (for example, an inner product) between features as a weight. The self-attention is attention extracted based on a focus of a feature map.

For convolution, setting of a convolution kernel limits a size of a receptive field. As a result, the network usually needs multi-layer stacking to focus on the entire feature map. An advantage of the self-attention is that a focus of the self-attention is global, and the self-attention can obtain global spatial information of the feature map through simple querying and assignment. A special point of the self-attention in a query key value (query key value, QKV) model is that the inputs corresponding to the QKV are consistent. The QKV model is described subsequently.

4. Feedforward neural network

The feedforward neural network (feedforward neural network, FNN) is an earliest invented simple artificial neural network. In the feedforward neural network, neurons belong to different layers. A neuron at each layer can receive a signal from a neuron at a previous layer, and generate a signal for output to a next layer. A $0^{th}$ layer is referred to as an input layer, a last layer is referred to as an output layer, and another intermediate layer is referred to as a hidden layer. There is no feedback in the entire network, and the signal is propagated unidirectionally from the input layer to the output layer.

5. Multi-layer perceptron (multi-layer perceptron, MLP)

The multi-layer perceptron, also referred to as a multi-layer perceptron, is a feedforward artificial neural network model that maps an input to a single output.

6. Loss function

In a process of training the deep neural network, because it is expected that an output of the deep neural network is as close as possible to a value that is actually expected to be predicted, a current predicted value of the network may be compared with a target value that is actually expected, and then a weight vector at each layer of the neural network is updated based on a difference between the current predicted value and the target value (certainly, there is usually an initialization process before the first update, that is, a parameter is preconfigured for each layer of the deep neural network). For example, if the predicted value of the network is high, the weight vector is adjusted to lower the predicted value until the neural network can predict the target value that is actually expected. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

7. Upsampling

In the field of deep learning used in computer vision, after a feature is extracted from an input image by using a convolutional neural network (CNN), an output size usually becomes smaller, and sometimes the image needs to be restored to an original size for further calculation (for example, semantic segmentation of the image). This operation of expanding the image size and mapping the image from small resolution to large resolution is referred to as the upsampling (upsampling).

There are three common upsampling methods: bilinear (bilinear) interpolation, transposed convolution (transposed convolution), and unpooling (unpooling).

8. Modality, multi-modality, multimodal data, and multimodal fusion

In general, the modality refers to a way that a thing occurs or exists, and the multi-modality refers to a combination of two or more modalities in various forms.

Each source or form of information may be referred to as the modality (modality), and in the current research field, processing performed on modalities such as an image, a text, and a voice is mainly used.

The foregoing modalities may also be understood as "sensory", that is, a channel through which an organism receives information by using a sense organ and experience. For example, humans have modalities such as a vision sense, a hearing sense, a tactile sense, a taste sense, and an olfaction sense. The multi-modality may be understood as fusion of a plurality of senses. For example, a human may communicate with an intelligent device through a plurality of channels such as a voice, a body language, an information carrier (for example, a text, a picture, an audio, or a video), and an environment. The intelligent device determines an intention of the human after integrating multimodal information, and sends a feedback to the human in a plurality of manners such as a text, a sound, and a light belt.

The multimodal data refers to data of a plurality of different modalities, and the modalities may include a text, an image, an audio/video, and the like. It may be understood that, in some scenarios, images of different structures may also be referred to as different modalities. For example, an RGB image and a depth image are data of different modalities. Texts of different structures may also be referred to as different modalities. For example, Chinese and English are data of different modalities. Audios in different formats may also be referred to as different modalities. For example, a waveform audio file (MAV) and an audio video interleave (audio video interleave, AVI) format are data in different modalities.

The multimodal fusion in deep learning refers to a technology that a machine obtains information from a plurality of fields such as a text, an image, a voice, and a video, and implements information conversion and fusion to improve model performance. A reason that the modalities need to be fused is that different modalities have different representation manners and different perspectives for things. Therefore, there are some phenomenons such as overlapping (therefore, there is information redundancy) and complementarity (therefore, this is better than a single feature), and there may even be a plurality of different information interactions between the modalities. If the multimodal information can be reasonably processed, rich feature information can be obtained.

The following describes a system architecture according to embodiments of this application.

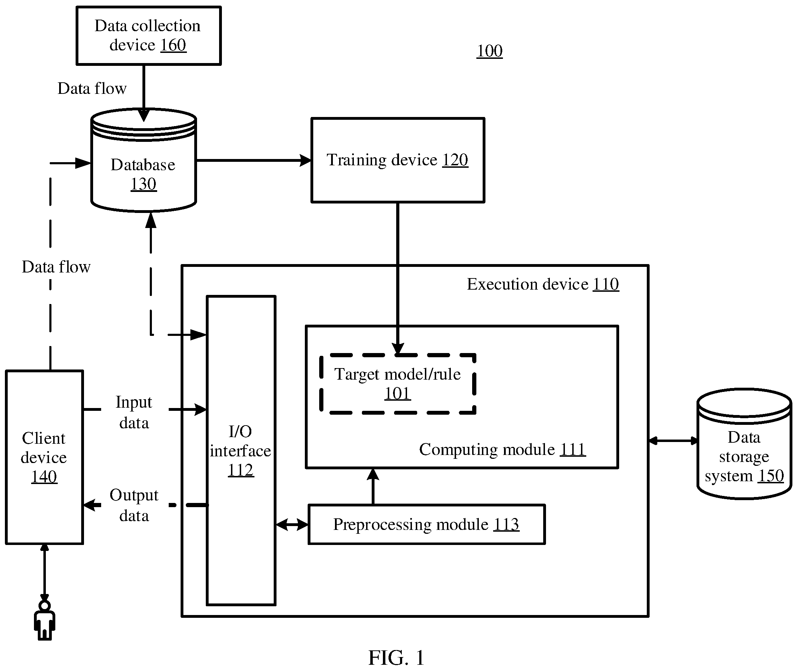

Referring to FIG. 1, an embodiment of the present invention provides a system architecture 100. As shown in the system architecture 100, a data collection device 160 is configured to collect training data. In embodiments of this application, the training data includes a plurality of pieces of data in different modalities. The modality may be a text, an image, or a video/audio. For example, the training data may include an RGB image and a depth image, or may include an RGB image, point cloud data, and the like. The training data is stored in a database 130, and a training device 120 obtains a target model/rule 101 through training based on the training data maintained in the database 130. The following describes in more detail how the training device 120 obtains the target model/rule 101 based on the training data. The target model/rule 101 can be used to implement a computer vision task in which the data processing method according to embodiments of this application is used. The computer vision task may include a classification task, a segmentation task, a detection task, an image generation task, or the like. The target model/rule 101 in embodiments of this application may specifically include a self-attention network, a multi-layer perceptron, a pooling layer, and the like. It should be noted that, in actual application, the training data maintained in the database 130 is not necessarily collected by the data collection device 160, but may be received from another device. It should further be noted that the training device 120 may not necessarily perform training for the target model/rule 101 completely based on the training data maintained in the database 130, or may obtain training data from a cloud or another place for model training. The foregoing description should not be construed as a limitation on embodiments of this application.

The target model/rule 101 obtained through training by the training device 120 may be used in different systems or devices, for example, used in an execution device 110 shown in FIG. 1. The execution device 110 may be a terminal, for example, a mobile phone terminal, a tablet computer, a notebook computer, an augmented reality (augmented reality, AR) device/virtual reality (virtual reality, VR) device, a vehicle-mounted terminal, or the like. Certainly, the execution device 110 may alternatively be a server, a cloud, or the like. In FIG. 1, an I/O interface 112 is configured for the execution device 110, and is configured to exchange data with an external device. A user may input data into the I/O interface 112 by using a client device 140. The input data in embodiments of this application may include a to-be-detected image. In addition, the input data may be input by the user, may be uploaded by the user by using a photographing device, or certainly may come from a database. This is not specifically limited herein.

A preprocessing module 113 is configured to perform preprocessing based on the input data received by the I/O interface 112. In embodiments of this application, the preprocessing module 113 may be configured to split the input data to obtain a subdata set. For example, the input image is an image, and the preprocessing module 113 is configured to split the image to obtain a plurality of image blocks.

In a process in which the execution device 110 preprocesses the input data, or in a process in which a computing module 111 in the execution device 110 performs related processing like computation, the execution device 110 may invoke data, code, and the like in a data storage system 150 for corresponding processing, and may further store, into the data storage system 150, data, instructions, and the like that are obtained through corresponding processing.

Finally, the I/O interface 112 returns a processing result, for example, an obtained result corresponding to a target task to the client device 140, to provide the processing result for the user.

It should be noted that the training device 120 may generate corresponding target models/rules 101 for different targets or different tasks based on different training data. The corresponding target models/rules 101 may be used to implement the foregoing targets or complete the foregoing tasks, to provide a required result for the user.

In a case shown in FIG. 1, the user may manually specify the input data, and the input data may be manually specified through an interface provided by the I/O interface 112. In another case, the client device 140 may automatically send the input data to the I/O interface 112. If it is required that the client device 140 needs to obtain authorization from the user to automatically send the input data, the user may set corresponding permission on the client device 140. The user may check, on the client device 140, a result output by the execution device 110. Specifically, the result may be presented in a specific manner of display, a sound, an action, or the like. The client device 140 may also be used as a data collection end to collect, as new sample data, the input data that is input into the I/O interface 112 and an output result that is output from the I/O interface 112 shown in the figure, and store the new sample data in the database 130. Certainly, the client device 140 may alternatively not perform collection. Instead, the I/O interface 112 directly stores, in the database 130 as the new sample data, the input data that is input into the I/O interface 112 and the output result that is output from the I/O interface 112 in the figure.

It should be noted that FIG. 1 is merely a schematic diagram of a system architecture according to an embodiment of the present invention. A position relationship between a device, a component, a module, and the like shown in the figure constitutes no limitation. For example, in FIG. 1, the data storage system 150 is an external memory relative to the execution device 110. In another case, the data storage system 150 may alternatively be disposed in the execution device 110.

As shown in FIG. 1, the target model/rule 101 is obtained through training by the training device 120. The target model/rule 101 in embodiments of this application may specifically be a target neural network.

The following describes a hardware structure of a chip according to embodiments of this application.

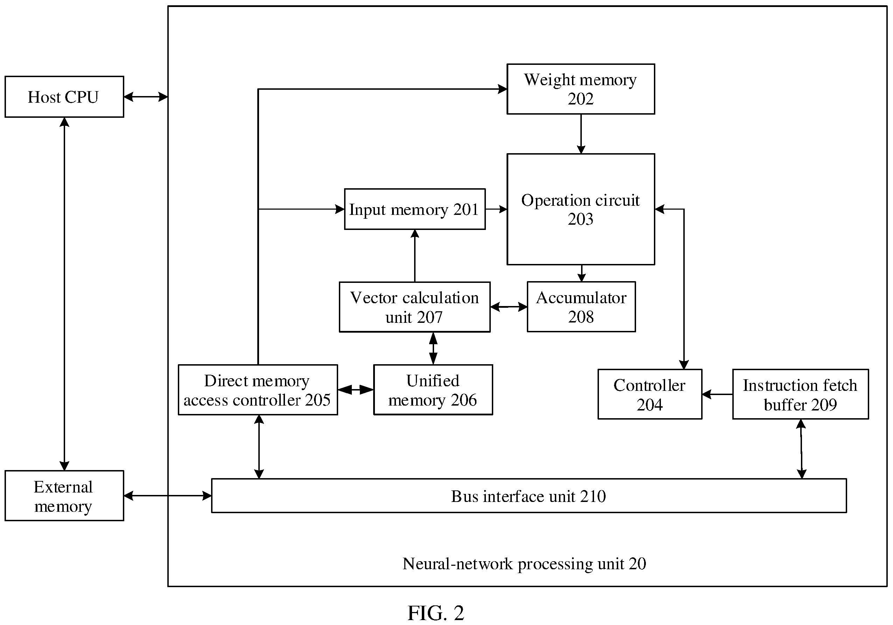

FIG. 2 shows a hardware structure of a chip according to an embodiment of the present invention, and the chip includes a neural-network processing unit 20. The chip may be disposed in the execution device 110 shown in FIG. 1, to complete calculation work of the computing module 111. The chip may alternatively be disposed in the training device 120 shown in FIG. 1, to complete training work of the training device 120 and output the target model/rule 101.

The neural-network processing unit 20 may be any processor suitable for large-scale exclusive OR operation processing, for example, a neural-network processing unit (neural-network processing unit, NPU), a tensor processing unit (tensor processing unit, TPU), or a graphics processing unit (graphics processing unit, GPU). The NPU is used as an example. The neural-network processing unit 20 is used as a coprocessor, and is mounted to a host central processing unit (central processing unit, CPU) (host CPU). The host CPU allocates a task. A core part of the NPU is an operation circuit 203. A controller 204 controls the operation circuit 203 to extract data from a memory (a weight memory or an input memory) and perform an operation.

In some implementations, the operation circuit 203 includes a plurality of process engines (process engine, PE) inside. In some implementations, the operation circuit 203 is a two-dimensional systolic array. The operation circuit 203 may alternatively be a one-dimensional systolic array or another electronic circuit that can perform arithmetical operations such as multiplication and addition. In some implementations, the operation circuit 203 is a general-purpose matrix processor.

For example, it is assumed that there is an input matrix A, a weight matrix B, and an output matrix C. The operation circuit 203 fetches, from the weight memory 202, data corresponding to the matrix B, and buffers the data in each PE of the operation circuit. The operation circuit fetches data of the matrix A from an input memory 201, to perform a matrix operation on the matrix B, and stores an obtained partial result or an obtained final result of the matrix in an accumulator 208.

A vector calculation unit 207 may perform further processing such as vector multiplication, vector addition, an exponent operation, a logarithm operation, or value comparison on an output of the operation circuit. For example, the vector calculation unit 207 may be configured to perform network computation, such as pooling (pooling), batch normalization (batch normalization), or local response normalization (local response normalization), at a non-convolutional/non-FC layer of a neural network.

In some implementations, the vector calculation unit 207 can store a processed output vector in a unified cache 206. For example, the vector calculation unit 207 may apply a non-linear function to the output of the operation circuit 203, for example, to a vector of an accumulated value, to generate an activation value. In some implementations, the vector calculation unit 207 generates a normalized value, a combined value, or both. In some implementations, the output vector that has been processed can be used as an activation input of the operation circuit 203, for example, to be used at a subsequent layer in the neural network.

The unified memory 206 is configured to store input data and output data.

For weight data, a direct memory access controller (direct memory access controller, DMAC) 205 transfers input data in an external memory into the input memory 201 and/or the unified memory 206, stores weight data in the external memory into the weight memory 202, and stores data in the unified memory 206 into the external memory.

A bus interface unit (bus interface unit, BIU) 210 is configured to implement interaction between the host CPU, the DMAC, and an instruction fetch buffer 209 through a bus.

The instruction fetch buffer (instruction fetch buffer) 209 connected to the controller 204 is configured to store instructions to be used by the controller 204.

The controller 204 is configured to invoke the instructions cached in the instruction fetch buffer 209, to implement a working process of controlling an operation accelerator.

Generally, the unified memory 206, the input memory 201, the weight memory 202, and the instruction fetch buffer 209 each are an on-chip (on-chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

The following describes several application scenarios of this application.

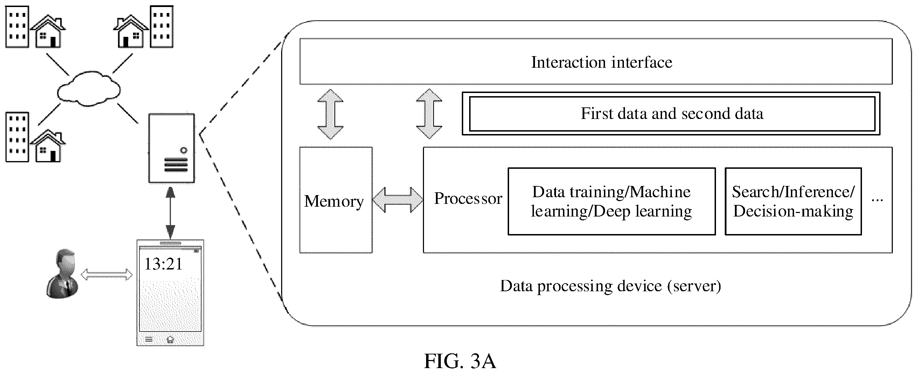

FIG. 3A is a schematic diagram of a structure of a data processing system according to an embodiment of this application. The data processing system includes a terminal device (in FIG. 3A, an example in which the terminal device is only a mobile phone is used) and a data processing device. It may be understood that, in addition to being the mobile phone, the terminal device may further be a terminal device like a tablet computer (pad), a portable game console, a personal digital assistant (personal digital assistant, PDA), a notebook computer, an ultra-mobile personal computer (ultra-mobile personal computer, UMPC), a handheld computer, a netbook, a vehicle-mounted media playback device, a wearable electronic device, a virtual reality (virtual reality, VR) terminal device, an augmented reality (augmented reality, AR) terminal device, a vehicle, a vehicle-mounted terminal, an aircraft terminal, or an intelligent robot. The terminal device is an initiator of data processing. As an initiator of a data processing request, a user usually initiates the request by using the terminal device.

The data processing device may be a device or a server that has a data processing function, for example, a cloud server, a network server, an application server, and a management server. The data processing device receives the data processing request from the terminal device through an interaction interface, and performs data processing in a manner like machine learning, deep learning, search, inference, and decision-making by using a memory for storing data and a processor for processing the data. The memory in the data processing device may be a general name, and includes a local storage and a database that stores historical data. The database may be on the data processing device, or may be on another network server.

In the data processing system shown in FIG. 3A, the terminal device may receive an instruction of the user. For example, the terminal device may obtain a plurality of pieces of data (for example, images, texts, and audios captured by the terminal device by using the terminal device) input/selected by the user, and initiate the request to the data processing device, so that the data processing device performs data processing (for example, computer vision tasks such as classification, segmentation, detection, and image generation) on the plurality of pieces of data obtained by the terminal device, to obtain corresponding processing results for the plurality of pieces of data. For example, the terminal device may obtain a plurality of images input by the user, and initiate an image detection request to the data processing device, so that the data processing device detects the images, to obtain detection results of the images, and display the detection results of the images for the user to view and use.

In FIG. 3A, the data processing device may perform the data processing method according to embodiments of this application.

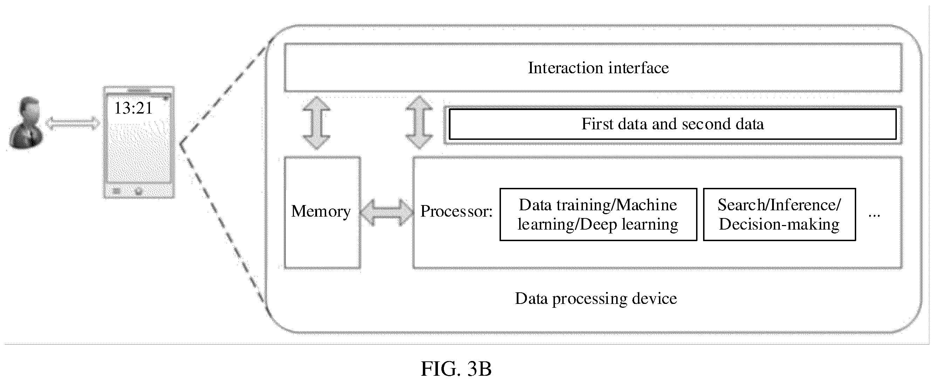

FIG. 3B is another schematic diagram of a structure of a data processing system according to an embodiment of this application. In FIG. 3B, a terminal device (in FIG. 3B, an example in which the terminal device is only a mobile phone is used) is directly used as a data processing device, and the terminal device can directly obtain a plurality of pieces of data (for example, the data is an image, a text, and an audio) that are directly processed by hardware of the terminal device. A specific process is similar to that in FIG. 3A. For details, refer to the foregoing description. Details are not described herein again.

Optionally, in the data processing system shown in FIG. 3B, the terminal device may receive an instruction of a user. For example, the terminal device may obtain a plurality of images selected by the user in the terminal device, and the terminal device performs data processing (for example, computer vision tasks such as classification, segmentation, detection, and image generation) on the images, to obtain corresponding processing results for the images, and display the processing results for the user to view and use.

Optionally, in the data processing system shown in FIG. 3B, the terminal device may collect an image in real time or periodically, and the terminal device performs data processing (for example, computer vision tasks such as classification, segmentation, detection, and image generation) on the image, to obtain a corresponding processing result for the image, and implement functions (a classification function, a segmentation function, a detection function, an image generation function, and the like) based on the processing result.

In FIG. 3B, the terminal device may perform the data processing method according to embodiments of this application.

The terminal device in FIG. 3A and FIG. 3B may be specifically the client device 140 or the execution device 110 in FIG. 1, and the data processing device in FIG. 3A may be specifically the execution device 110 in FIG. 1. The data storage system 150 may store data to be processed by the execution device 110. The data storage system 150 may be integrated into the execution device 110, or may be disposed on a cloud or another network server.

Processors in FIG. 3A and FIG. 3B may perform data training/machine learning/deep learning by using a neural network model or another model (for example, an attention model or an MLP), and perform data processing on the plurality of pieces of data by using the model finally obtained through training or learning of the data, to obtain the corresponding processing results.

The following describes the data processing method according to embodiments of this application. The method may be performed by a data processing device, or may be performed by a component (for example, a processor, a chip, or a chip system) of the data processing device. The data processing device may be a cloud device (as shown in FIG. 3A), or may be a terminal device (for example, the mobile phone shown in FIG. 3B). Certainly, the method may alternatively be executed by a system including a cloud device and a terminal device (as shown in FIG. 3A). Optionally, the method may be processed by a CPU in the data processing device, or may be processed by both a CPU and a GPU; or no GPU may be used, but another processor suitable for neural network computation is used. This is not limited in this application.

The terminal device may be a digital display product like a mobile phone, a tablet computer (pad), a portable game console, a personal digital assistant (personal digital assistant, PDA), a notebook computer, an ultra-mobile personal computer (ultra-mobile personal computer, UMPC), a handheld computer, a netbook, a vehicle-mounted media playback device, a wearable electronic device, a virtual reality (virtual reality, VR) terminal device, or an augmented reality (augmented reality, AR) terminal device.

The method according to embodiments of this application is mainly used in an application scenario like a multimodal fusion scenario, and may be specifically used in computer vision tasks such as a classification scenario, a segmentation scenario, a detection scenario, or an image generation scenario, or may be used in semantic segmentation, indoor scenario perception, outdoor driving, and the like. In addition, data in embodiments of this application may be a text, an image, an audio/video, or the like. For ease of description, an example in which the data is only the image is used for example description in this specification.

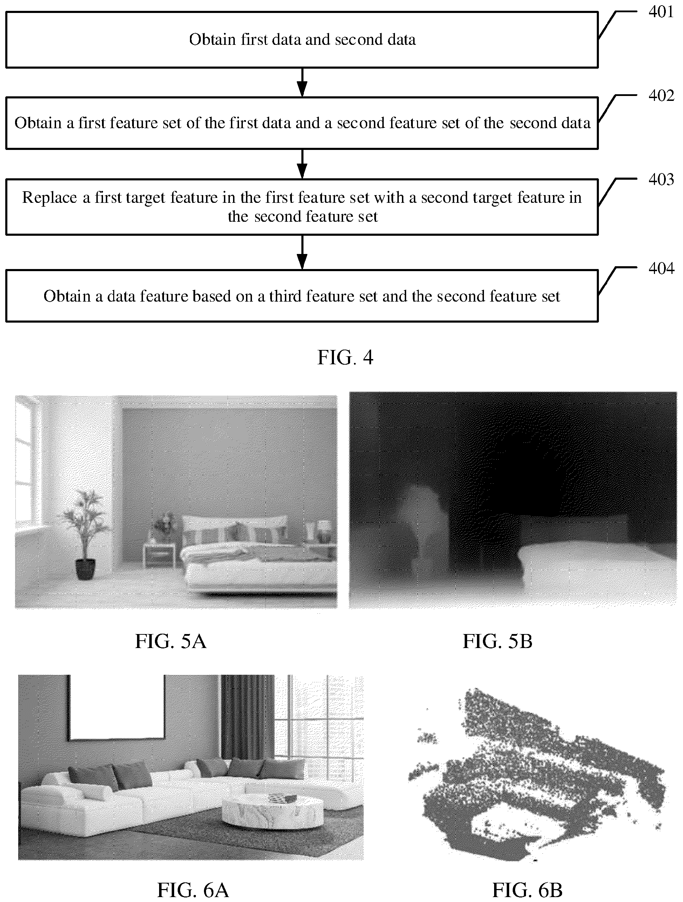

FIG. 4 is a schematic flowchart of a data processing method according to an embodiment of this application. The method may include step 401 to step 404. The following describes step 401 to step 404 in detail.

Step 401: Obtain first data and second data.

In embodiments of this application, a data processing device obtains the first data and the second data in a plurality of manners such as obtaining the first data and the second data through collection/photographing, receiving the first data and the second data sent by another device, selecting the first data and the second data from a database, or the like. This is not specifically limited herein.

Optionally, if the data processing device is used in a self-driving scenario, the data processing device may be a vehicle, and the first data and the second data may be data collected by the vehicle in real time, or may be data periodically collected. This is not specifically limited herein.

In embodiments of this application, an example in which the first data and the second data are only image-related data is used for example description. In actual application, the first data and the second data may alternatively be text-related data, audio/video-related data, or the like. This is not specifically limited herein.

A relationship between the first data and the second data in embodiments of this application may be classified into a plurality of cases that are separately described below.

Case 1: The first data and the second data belong to homogeneous multimodal data.

The homogeneous multimodal data means that a presentation manner of a modality to which the first data belongs is the same as a presentation manner of a modality to which the second data belongs. For example, the first data is an RGB image, the second image is a depth map, and the presentation manners of both the first data and the second data are the images.

Optionally, the first data and the second data are image data, the first data and the second data are text data, the first data and the second data are audio data, or the like. This is not specifically limited herein.

Example 1: The first data is an RGB image shown in FIG. 5A, and the second image is a depth image shown in FIG. 5B. The example 1 may be used in a cloud service scenario (for example, a semantic segmentation scenario), and the data processing device may be an intelligent camera, an intelligent robot, or the like.

Case 2: The first data and the second data belong to heterogeneous multimodal data.

The heterogeneous multimodal data means that a multi-modality to which the first data belongs is different from a multi-modality to which the second data belongs.

Optionally, the first data is image data, and the second data is point cloud data. Alternatively, the first data is text data, and the second data is audio data; or the like. This is not specifically limited herein.

Example 2: The first data is an RGB image shown in FIG. 6A, and the second image is point cloud data shown in FIG. 6B. The example 2 may be used in a self-driving scenario (for example, an intelligent perception scenario), and the data processing device may be an intelligent vehicle or the like.

Step 402: Obtain a first feature set of the first data and a second feature set of the second data.

After obtaining the first data and the second data, the data processing device may obtain the first feature set of the first data and the second feature set of the second data.

Optionally, the first data is split to obtain a plurality of pieces of first subdata. The second data is split to obtain a plurality of pieces of second subdata. The first feature set is obtained based on the plurality of pieces of first subdata, and the second feature set is obtained based on the plurality of pieces of second subdata.

Optionally, a quantity of split first data is related to a quantity of features in the first feature set. For example, the quantity of split first data is the same as the quantity of features in the first feature set. Similarly, a quantity of split second data is related to a quantity of features in the second feature set. For example, the quantity of split second data is the same as the quantity of features in the second feature set.

In embodiments of this application, a rule for splitting data (including the first data and the second data) may be set based on an actual requirement. For example, the splitting rule is that a whole or a part of the data is evenly divided, unevenly divided, or the like. This is not specifically limited herein.

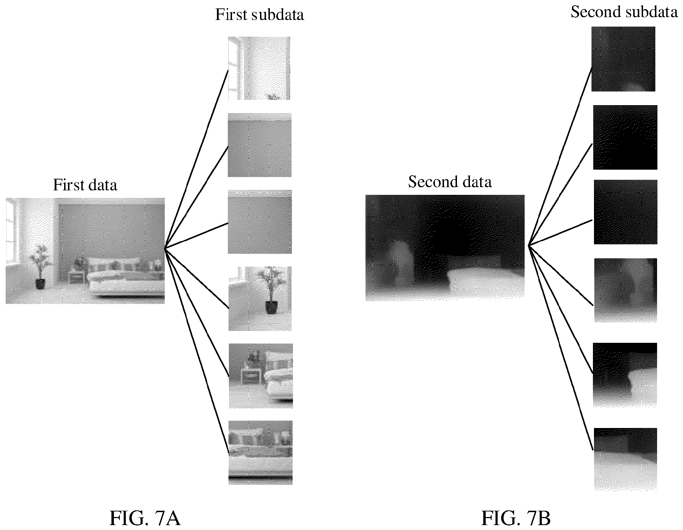

For example, the foregoing example 1 is continued, and splitting of the first data in FIG. 5A and the plurality of pieces of first subdata may be shown in FIG. 7A. Splitting of the second data in FIG. 5B and the plurality of pieces of second subdata may be shown in FIG. 7B.

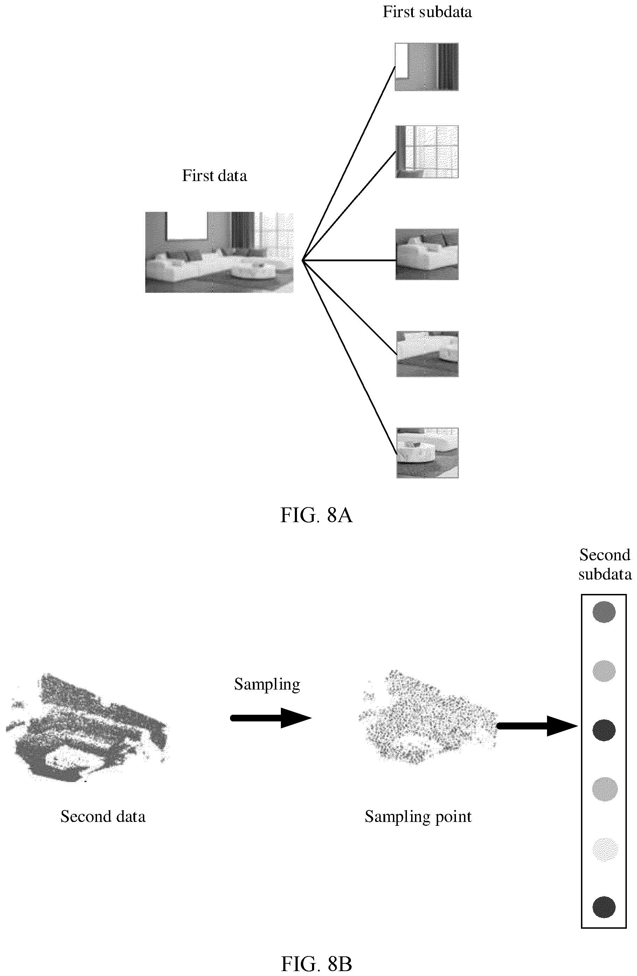

For example, the foregoing example 2 is continued, and splitting of the first data in FIG. 6A and the plurality of pieces of first subdata may be shown in FIG. 8A. Splitting of the second data in FIG. 6B and the plurality of pieces of second subdata may be shown in FIG. 8B. As shown in FIG. 8B, when the second data is the point cloud data, the second data may be sampled to obtain a sampling point, and the sampling point is used as the second subdata.

Optionally, after the plurality of pieces of first subdata and the plurality of pieces of second subdata are obtained, the first feature set may be obtained based on the plurality of pieces of first subdata, and the second feature set may be obtained based on the plurality of pieces of second subdata. Specifically, the first feature set of the plurality of pieces of first subdata is obtained by using a neural network, and the second feature set of the plurality of pieces of second subdata is obtained by using the neural network. The plurality of pieces of first subdata may one-to-one correspond to the quantity of features in the first feature set, and the plurality of pieces of second subdata may one-to-one correspond to the quantity of features in the second feature set. Certainly, in actual application, it may alternatively be set that one feature corresponds to a plurality of pieces of subdata, or it may be set that a plurality of features correspond to one piece of subdata. This is not specifically limited herein.

The foregoing neural network may include an attention network, a multi-layer perceptron (multi-layer perceptron, MLP), a pooling layer, and the like. This is not specifically limited herein.

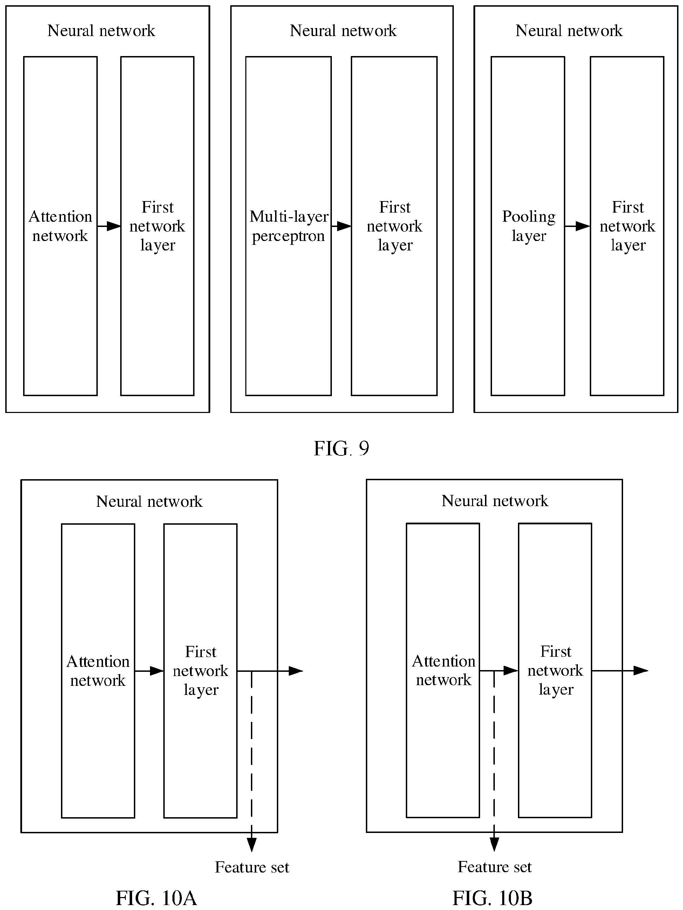

For example, examples of three structures of the neural network may be shown in FIG. 9. It may be understood that the neural network may include only the attention network, the multi-layer perceptron, the pooling layer, a convolutional layer, or the like. In other words, locations of the first feature set and the second feature set in the neural network are not limited. For example, the neural network includes the attention network and a first network layer. The first feature set and the second feature set may be outputs of the attention network (as shown in FIG. 10A), may be outputs of the first network layer (as shown in FIG. 10B), or the like (for example, the first feature set and the second feature set may be features input into the attention network). This is not specifically limited herein. In addition, for ease of subsequent example description, the attention network may include L submodules. Alternatively, it is understood that the attention network is a network of an L-layer structure, and structures of all layers are the same.

Step 403: Replace a first target feature in the first feature set with a second target feature in the second feature set.

After obtaining the first feature set and the second feature set, the data processing device may replace the first target feature in the first feature set with the second target feature in the second feature set, to obtain a third feature set. The second target feature corresponds to the first target feature. A correspondence between the second target feature and the first target feature may be determined based on a spatial relationship, a semantic relationship, or the like between the first data and the second data, or may be determined based on locations of features in feature sets, or the like. How to determine a correspondence between features in different feature sets is not limited herein.

Optionally, after obtaining the first feature set and the second feature set, the data processing device may first obtain a first score set of the first feature set and a second score set of the second feature set, determine the first target feature and the second target feature based on the first score set and/or the second score set, and replace the first target feature in the first feature set with the second target feature, to obtain the third feature set.

The following first describes an obtained score set of a feature set. The score set includes a plurality of scores, and the score may be used to evaluate feature importance (a larger value is better), may be used to evaluate feature invalidity (a smaller value is better), or the like. In addition, a quantity of scores in the score set may one-to-one correspond to features in the feature set. Certainly, features may also be scored at different dimensions. In this manner, one feature may correspond to a plurality of scores. A quantity of scores corresponding to the feature is not limited herein, that is, there may be one or more scores. For ease of subsequent description, in embodiments of this application, an example in which one feature corresponds to only one score is used for description.

In embodiments of this application, there are a plurality of manners of obtaining the score set of the feature set. The following separately describes the manners:

1. The score set corresponding to the feature set is obtained by using a scoring network.

In this manner, the scoring network may be introduced, and the scoring network may be used to evaluate the feature importance.

Optionally, each feature in the first feature set is evaluated by using the scoring network, to obtain the first score set. Each feature in the second feature set is evaluated by using the scoring network, to obtain the second score set. Specifically, each feature in the first feature set is input into the scoring network, to obtain the first score set. Each feature in the second feature set is input into the scoring network, to obtain the second score set.

In addition, it is ensured that output values of the scoring network conform to sparse distribution. To be specific, it may be understood that the output value of the scoring network is more sparse, so that scores of some features differ greatly from scores of other features, and further, useful features or useless features are determined. The scoring network may be trained by using an L1 norm in a training process.

2. The score set corresponding to the feature set is obtained based on a mathematical operation on each feature in the feature set.

The foregoing mathematical operation may be understood as the mathematical operation performed on the feature, and may include a rank operation (for example, the feature is in a matrix form), a modulo operation (for example, the feature is in a vector form), and the like. This is not specifically limited herein.

Optionally, when representation forms of the features in the first feature set and the second feature set are matrices, the score sets may be obtained by performing the rank calculation operation on the feature matrices. Specifically, the rank calculation operation is performed on each feature matrix in the first feature set, to obtain the first score set. The rank calculation operation is performed on each feature matrix in the second feature set, to obtain the second score set.

Optionally, when representation forms of the features in the first feature set and the second feature set are vectors, the score sets may be obtained by performing the modulo calculation operation on the feature vectors. Specifically, the modulo calculation operation is performed on each feature vector in the first feature set, to obtain the first score set. The modulo calculation operation is performed on each feature vector in the second feature set, to obtain the second score set.

It may be understood that the foregoing two manners of obtaining the score set corresponding to the feature set are merely examples. In actual application, the score set may be obtained in another manner. This is not specifically limited herein.

After obtaining the score sets corresponding to the feature sets, the data processing device may determine the first target feature and the second target feature based on the first score set and/or the second score set, and then replace the first target feature with the second target feature.

The correspondence between the second target feature and the first target feature may be determined according to a first preset rule or in another manner. This is not specifically limited herein. In other words, determining the second target feature is equivalent to determining the first target feature, or determining the first target feature is equivalent to determining the second target feature. Therefore, the first target feature and the second target feature may be determined based on the first score set and/or the second score set. As described above, the correspondence between the second target feature and the first target feature may be determined based on the spatial relationship, the semantic relationship, or the like between the first data and the second data, or may be determined based on the locations of the features in the feature sets, or the like. How to determine the correspondence between the features in different feature sets is not limited herein. In other words, the first preset rule may be related to a spatial relationship, a semantic relationship, and the like between multimodal data.

Optionally, the data processing device may determine the first target feature in the first feature set based on the first score set and according to a second preset rule. After the first target feature is determined, the second target feature corresponding to the first target feature may be further determined according to the first preset rule.

Optionally, the data processing device may determine the second target feature in the second feature set based on the second score set and according to a second preset rule. After the second target feature is determined, the first target feature corresponding to the second target feature may be further determined according to the first preset rule.

The following separately describes the first preset rule and the second preset rule mentioned above.

The foregoing first preset rule is specifically used to determine a correspondence between a first feature in the first feature set and a second feature in the second feature set. The relationship may be one-to-one, or may be one-to-many, or many-to-one. This is not specifically limited herein. The first preset rule may be set based on an actual requirement. For example, the first preset rule includes: A feature at a first location in the first feature set corresponds to a feature at a second location in the second feature set. For another example, the first preset rule includes: A feature at a first location in the first feature set corresponds to a feature at a first location in the second feature set. In actual application, the first preset rule may alternatively be another case. This is not limited herein. A location of the feature in the first feature set and a location of the feature in the second feature set may be determined through residual location coding or in another manner.

For example, the first feature set sequentially includes an A1 feature, an A2 feature, an A3 feature, an A4 feature, an A5 feature, and an A6 feature. The second feature set sequentially includes a B1 feature, a B2 feature, a B3 feature, a B4 feature, a B5 feature, and a B6 feature. In this case, the foregoing first preset rule may be that A1 corresponds to B1, A2 corresponds to B2, A3 corresponds to B3, A4 corresponds to B4, A5 corresponds to B5, and A6 corresponds to B6. Alternatively, the foregoing first preset rule may be that A1 corresponds to B2, A2 corresponds to B3, A3 corresponds to B4, A4 corresponds to B5, A5 corresponds to B6, and A6 corresponds to B1. Alternatively, the foregoing first preset rule may be that A1 corresponds to B5, A2 corresponds to B3, A3 corresponds to B1, A4 corresponds to B2, A5 corresponds to B6, and A6 corresponds to B4. The first target feature is a feature that is related to the foregoing correspondence and that is in the first feature set, and the second target feature is a feature that is in the second feature set and that corresponds to the first target feature.

The foregoing second preset rule is specifically used to determine the first target feature and/or the second target feature. The second preset rule may be set based on an actual requirement. The second preset rule may be specifically related to a score value, a preset score, and the like. For example, the second preset rule includes: determining a feature with a smallest score in the first score set as the first target feature. For another example, the second preset rule includes: determining a feature with a largest score in the second score set as the second target feature. For another example, the second preset rule includes: determining a feature with a largest score in the first score set as the first target feature. For another example, the second preset rule includes: determining a feature with a smallest score in the second score set as the second target feature. For another example, the second preset rule includes: determining, as the second target feature, a feature that is in the second score set and whose score is equal to the preset score. For another example, the second preset rule includes: determining, as the first target feature, a feature that is in the first score set and whose score is equal to a preset score, and the like. In actual application, the second preset rule may alternatively be another case. This is not limited herein.

For example, it is assumed that the neural network includes the attention network. The attention network may include the L submodules. Alternatively, it is understood that the attention network is the network of an L-layer structure, and the structures of all layers are the same. The scoring network is denoted as $s^l$, and a first score of a first feature (which may be denoted as $e_A^l$) in the first data set at an $l^{th}$ layer may be denoted as $s^l\left(e_A^l\right)$. The process of replacing the first target feature in the first feature set with the second target feature in the second feature set may be represented by using the following formula:

$$e_A^l = e_A^l \odot \mathbb{I}_{s^l\left(e_A^l\right) \geq \theta} + \mathrm{Proj}_B^A\left(e_A^l\right) \odot \mathbb{I}_{s^l\left(e_A^l\right) < \theta}$$

$e_A^l$ is a to-be-replaced feature (for example, the first target feature) in the first feature set. $\odot$ represents multiplication by elements. $\mathbb{I}$ is an indication function. If a subscript of the indication function meets a condition, an output of the indication function is 1. If the subscript of the indication function does not meet the condition, the output of the indication function is 0. 1 indicates replacement, and 0 indicates no replacement. $\theta$ may be understood as the preset score in the second preset rule, and a specific value may be set based on an actual requirement, for example, $\theta = 0.01$. $s^l\left(e_A^l\right)$ represents a score of the to-be-replaced feature (for example, a score of the first target feature) in the first feature set. $\mathrm{Proj}_B^A\left(e_A^l\right)$ represents that the first target feature $e_A^l$ in the first data set is projected to the second target feature in the second data set. A and B represent a correspondence between a feature in the first feature set and a feature in the second feature set (for example, the first target feature $e_A^l$ corresponds to the second target feature $e_B^l$). The foregoing formula may be understood as follows: A feature (for example, the first target feature) that is in the first feature set and whose score is less than $\theta$ is replaced with a feature (for example, the second target feature) corresponding to the feature in the second feature set.

Optionally, when the presentation manners of both the first data and the second data are the homogeneous multimodal data, $\mathrm{Proj}_B^A\left(e_A^l\right)$ represents identity mapping. When the first data and the second data are the heterogeneous multimodal data, for example, the first data is the RGB image, the second data is the point cloud, and a target task is a detection task, projection is performed by using a spatial relationship between the point cloud and the image (for example, the foregoing first preset rule is related to the spatial relationship between the multimodal data), to find a correspondence between an image patch and the point cloud. Specifically, it may be assumed that there are $N_{img}$ image patches (patches) and $N_{point}$ 3D sampling points that are used as inputs of the neural network. A process of projecting an $n_{point}^{th}$ 3D sampling point onto a corresponding $n_{img}^{th}$ image patch through $N_{point}$ - $N_{img}$ mapping may be represented as follows:

$$[u, v, z]^T = \mathrm{K} \cdot \mathrm{R}_t \cdot \left[x_{n_{\mathrm{point}}}, y_{n_{\mathrm{point}}}, z_{n_{\mathrm{point}}}, 1\right]^T,$$

and

$$n_{img} = \left\lfloor \frac{\lfloor v/z \rfloor}{P} \right\rfloor \times \left\lfloor \frac{W}{P} \right\rfloor + \left\lfloor \frac{\lfloor u/z \rfloor}{P} \right\rfloor$$

**K** and **R**$_t$ are intrinsic and extrinsic camera parameters. $[x_{n_{\mathrm{point}}}, y_{n_{\mathrm{point}}}, z_{n_{\mathrm{point}}}]$ represents 3D coordinates of the point. $[\lfloor u/z \rfloor, \lfloor v/z \rfloor]$ represent 2D pixels of the image. *W* and *P* are respectively a width of the original image and a width of the image patch.

In addition, when there are more than two pieces of multimodal data, for example, third data has been obtained, an allocation solution may be fixed in advance: $a_B(A) \in \{0,1\}^N$, to prevent confusion of correspondences between features in feature sets corresponding to different data. In this case, a representation of feature replacement between the multimodal data may be as follows:

$$e_A^l = e_A^l \odot \mathbb{I}_{s^l(e_A^l) \geq \theta} + \sum_{\mathrm{B}=1, \mathrm{B} \neq A}^M a_B(A) \odot Proj_B^A(e_A^l) \odot \mathbb{I}_{s^l(e_A^l) < \theta}$$

M is a quantity of different modalities in the multimodal data. For other explanations, refer to descriptions in the foregoing formulas. Details are not described herein again.

Step 404: Obtain a data feature based on the third feature set and the second feature set.

After obtaining the third feature set, the data processing device may obtain the data feature based on the third feature set and the second feature set. The data feature is used to implement a computer vision task, and the computer vision task includes a classification task, a segmentation task, a detection task, an image generation task, or the like.

In embodiments of this application, a location of the data feature in the neural network depends on a location of the first feature set and a location of the second feature set. For example, the location of the data feature in the neural network may be obtained through processing like fusion performed on the location of the first feature set and the location of the second feature set. For another example, the location of the data feature in the neural network may alternatively be a location at a network layer that is after one or more network layers of a location obtained after the first feature set and second feature set are fused. The location of the data feature in the neural network is not limited in embodiments of this application.

For example, the neural network includes the attention network, the first network layer, and a second network layer. If the first feature set and the second feature set are the outputs of the attention network, the obtaining the data feature based on the third feature set and the second feature set may include: inputting the third feature set and the second feature set into the first network layer, to obtain the data feature. If the first feature set and the second feature set are the outputs of the first network layer, the obtaining the data feature based on the third feature set and the second feature set may include: inputting the third feature set and the second feature set into the second network layer, to obtain the data feature.

For example, the neural network includes the multi-layer perceptron, the first network layer, and a second network layer. If the first feature set and the second feature set are outputs of the multi-layer perceptron, the obtaining the data feature based on the third feature set and the second feature set may include: inputting the third feature set and the second feature set into the first network layer, to obtain the data feature. Then, the data feature may be input into the second network layer, to obtain a result of the target task. If the first feature set and the second feature set are the outputs of the first network layer, the obtaining the data feature based on the third feature set and the second feature set may include: inputting the third feature set and the second feature set into the second network layer, to obtain the data feature.

For example, the neural network includes the pooling layer, the first network layer, and a second network layer. If the first feature set and the second feature set are outputs of the pooling layer, the obtaining the data feature based on the third feature set and the second feature set may include: inputting the third feature set and the second feature set into the first network layer, to obtain the data feature. If the first feature set and the second feature set are the outputs of the first network layer, the obtaining the data feature based on the third feature set and the second feature set may include: inputting the third feature set and the second feature set into the second network layer, to obtain the data feature.

The second network layer is related to the target task, and may be set based on an actual requirement. This is not specifically limited herein. For example, when the target task is the classification task, the second network layer may be a fully connected layer. For another example, when the target task is the segmentation task or the detection task, the second network layer may be a convolutional neural network layer or an upsampling layer.

In addition, it should be noted that the foregoing step 403 only describes replacing the first target feature in the first feature set with the second target feature in the second feature set, to obtain the third feature set. In actual application, a third target feature in the first feature set may be further used to replace a fourth target feature in the second feature set, to obtain a fourth feature set. In other words, in the data processing method according to embodiments of this application, a feature in two feature sets may be replaced (for example, a process of obtaining the third feature set), or features in two feature sets may be exchanged (for example, processes of obtaining the third feature set and the fourth feature set). This is not specifically limited herein. For a process of replacing the fourth target feature in the second feature set with the third target feature in the first feature set, to obtain the fourth feature set, refer to the description in the foregoing step 403. Details are not described herein again. The third target feature corresponds to the fourth target feature. For a specific correspondence, refer to the correspondence between the first target feature and the second target feature. Details are not described herein again.

Then, when the neural network includes a multi-layer structure, feature replacement may be performed on at least one layer. For example, feature replacement may be performed on only one layer. For another example, feature replacement is performed on a plurality of layers. For another example, feature replacement is performed on each layer. This is not specifically limited herein.

Optionally, if the data processing method according to embodiments of this application includes exchanging the features in the two feature sets, step 404 may include: replacing the fourth target feature in the second feature set with the third target feature in the first feature set, to obtain the fourth feature set. Then, the data feature is obtained based on the third feature set and the fourth feature set. A location of the third target feature in the first feature set corresponds to a location of the fourth target feature in the second feature set.

To more intuitively see a process of the data processing method according to embodiments of this application, the foregoing examples are continued in the following for example description.

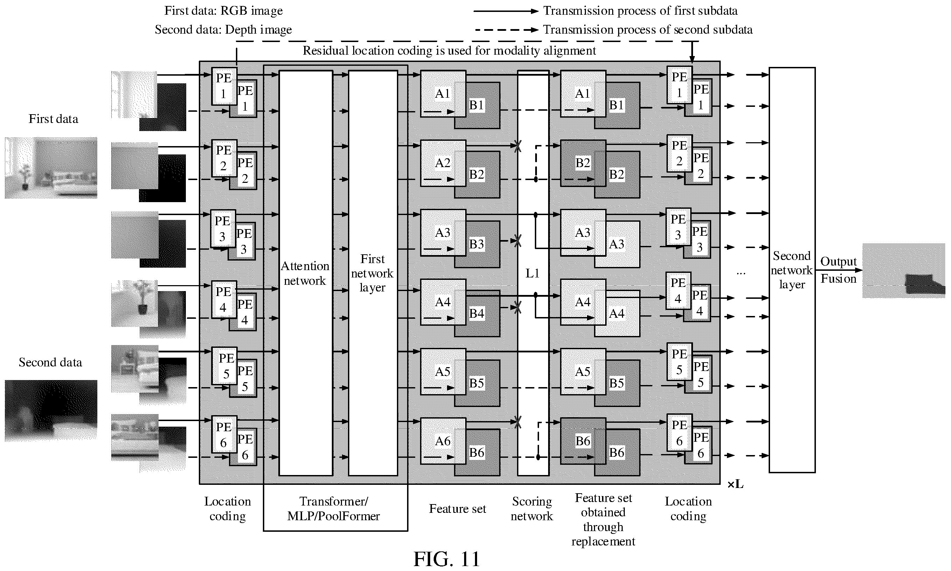

For example, the foregoing example 1 is continued, and description is made with reference to FIG. 11 by using an example in which the location of the feature set is shown in FIG. 10A, the first data is shown in FIG. 5A, the second data is shown in FIG. 5B, the first feature set is exchanged with the second feature set, and the to-be-replaced feature is determined by using the scoring network.

Refer to FIG. 11. The neural network includes the attention network, the first network layer, and the second network layer. The first data is the RGB image, the second data is the depth image, and the first data and the second data are the homogeneous multimodal data. The first data and the second image are separately split into six image patches that are input into the attention network and the first network layer, to obtain the first feature set (A1, A2, A3, A4, A5, A6) and the second feature set (B1, B2, B3, B4, B5, B6). The first feature set and the second feature set are scored by using the scoring network trained by using L1, and a to-be-replaced feature in each feature set is determined based on a scoring value. Correspondences between the first feature set and the second feature set include: A1-B1, A2-B2, A3-B3, A4-B4, A5-B5, and A6-B6. It is determined, by using the scoring network, that the first target feature in the first feature set includes A2 and A6. It is determined, by using the scoring network, that the second target feature in the second feature set includes B2 and B6. The first target feature in the first feature set is replaced with the second target feature in the second feature set, to obtain the third feature set (A1, B2, A3, A4, A5, B6). Similarly, it is determined, by using the scoring network, that the third target feature in the first feature set includes A3 and A4. It is determined, by using the scoring network, that the fourth target feature in the second feature set includes B3 and B4. The fourth target feature in the second feature set is replaced with the third target feature in the first feature set, to obtain the fourth feature set (B1, B2, A3, A4, B5, B6). The third feature set and the fourth feature set that are obtained through replacement may enter a next-layer neural network or the like before being input into the second network layer, and fusion processing is performed on an output to obtain a semantic segmentation result (for example, a semantic classification result of each pixel is output). To ensure location accuracy during feature replacement, residual location coding may be used for alignment. In addition, the foregoing correspondence is described above. Details are not described herein again.

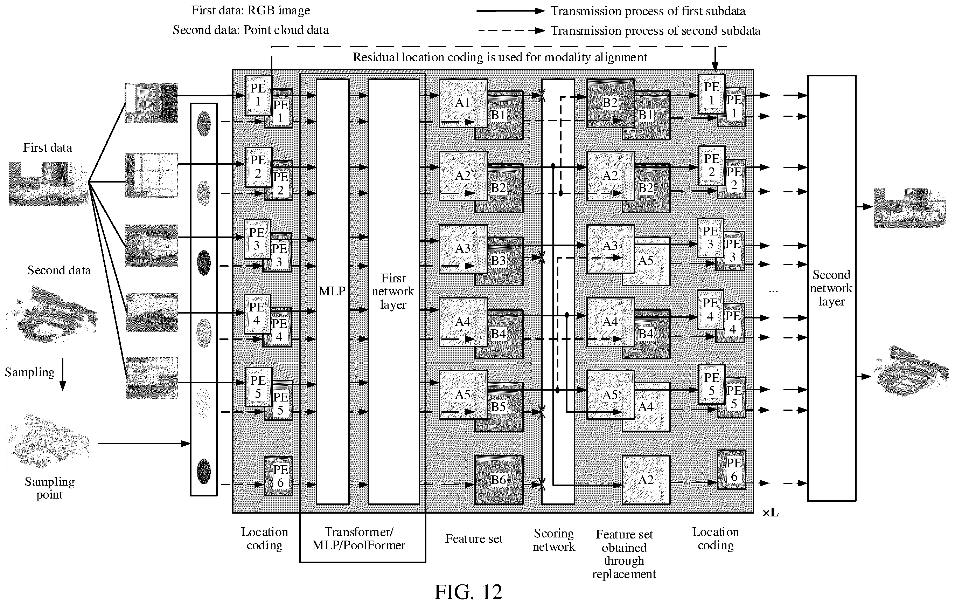

For example, the foregoing example 2 is continued, and description is made with reference to FIG. 12 by using an example in which the location of the feature set is shown in FIG. 10A, the first data is shown in FIG. 6A, the second data is shown in FIG. 6B, the first feature set is exchanged with the second feature set, and the to-be-replaced feature is determined by using the scoring network.

Refer to FIG. 12. The neural network includes the multi-layer perceptron, the first network layer, and the second network layer. The first data is the RGB image, the second data is the point cloud data, and the first data and the second data are the heterogeneous multimodal data. The first data is split into five image patches, the second data is sampled to obtain sampling points, and the five image patches and the sampling points (in FIG. 12, the sampling points are divided into six parts) are input into the multi-layer perceptron and the first network layer, to obtain the first feature set (A1, A2, A3, A4, A5) and the second feature set (B1, B2, B3, B4, B5, B6). The first feature set and the second feature set are scored by using the scoring network trained by using L1, and a to-be-replaced feature in each feature set is determined based on a scoring value. Correspondences between the first feature set and the second feature set include: A1-B2, A2-B6, A4-B5, and A5-B3. It is determined, by using the scoring network, that the first target feature in the first feature set includes A1. It is determined, by using the scoring network, that the second target feature in the second feature set includes B2. The first target feature in the first feature set is replaced with the second target feature in the second feature set, to obtain the third feature set (B2, A2, A3, A4, A5). Similarly, it is determined, by using the scoring network, that the third target feature in the first feature set includes A5, A4, and A2. It is determined, by using the scoring network, that the fourth target feature in the second feature set includes B3, B5, and B6. The fourth target feature in the second feature set is replaced with the third target feature in the first feature set, to obtain the fourth feature set (B1, B2, A5, B4, A4, A2). The third feature set and the fourth feature set that are obtained through replacement may enter a next-layer neural network or the like before being input into the second network layer, and an image with a detection box and a point cloud with a detection box are output. To ensure location accuracy during feature replacement, residual location coding may be used for alignment.

In embodiments of this application, in one aspect, information of different modal data can be efficiently fused by replacing features between different modal data, so that the obtained data feature has a multimodal data feature, and an expression capability of the data feature is improved. In this way, the result that is obtained based on the data feature and that is of the target task is more accurate. In another aspect, the scoring network is sparse, so that the scores of the some features differ greatly from the scores of the other features, and further, the useful features or the useless features are determined. In another aspect, a location of a replaced feature is determined through residual location coding, to ensure that the location of the feature in an original feature set is not changed when the feature is replaced.

To more intuitively see beneficial effect of the data processing method (hereinafter referred to as Mix) according to embodiments of this application, the following provides description by comparing performance results of different methods on a data set 1 and a data set 2.

Table 1 shows the test results:

**Table 1**

| Method | Input | Data set 1 | | | Data set 2 | | |
|---|---|---|---|---|---|---|---|
| | | Pixel accuracy | Average accuracy | Mean intersection over union | Pixel accuracy | Average accuracy | Mean intersection over union |
| FCN-32S | RGB | 60.0 | 42.2 | 29.2 | 68.4 | 41.1 | 29.0 |
| RefineNet | RGB | 74.4 | 59.6 | 47.6 | 81.1 | 57.7 | 47.0 |
| FuseNet | RGB+D | 68.1 | 50.4 | 37.9 | 76.3 | 48.3 | 37.3 |
| SSMA | RGB+D | 75.2 | 60.5 | 48.7 | 81.0 | 58.1 | 45.7 |
| CBN | RGB+D | 75.5 | 61.2 | 48.9 | 81.5 | 59.8 | 47.4 |
| RDFNet | RGB+D | 76.0 | 62.8 | 50.1 | 81.5 | 60.1 | 47.7 |
| CEN | RGB+D | 77.7 | 65.0 | 52.5 | 83.5 | 63.2 | 51.1 |
| w/o fusion [Ti] | RGB | 75.2 | 62.5 | 49.7 | 82.3 | 60.6 | 47.0 |
| Concat [Ti] | RGB | 76.5 | 63.4 | 50.8 | 82.8 | 61.4 | 47.9 |
| Mix [Ti] | RGB+D | **78.6** | **66.2** | **53.3** | **84.0** | **63.3** | **51.4** |
| w/o fusion [S] | RGB | 76.0 | 63.0 | 50.6 | 82.9 | 61.3 | 48.0 |
| Concat [S] | RGB | 77.1 | 63.8 | 51.4 | 83.5 | 62.0 | 49.0 |
| Mix [S] | RGB+D | **79.0** | **66.9** | **54.2** | **84.7** | **64.1** | **53.0** |

The foregoing method includes a fully convolutional network (fully convolutional network, FCN), RefineNet, FuseNet, a self-supervised model adaptation (self-supervised model adaptation, SSMA) method, a cross-iteration batch normalization (cross-iteration batch normalization, CBN) method, an RGB-D fusion network (RGB-D fusion network, RDFNet), a channel exchanging network (channel exchanging network, CEN), a fusion (fusion) method, an input concatenation (concatenation) method, and the Mix method according to embodiments of this application. 32S in FCN-32S represents that a feature map of the convolutional layer is 1/32 of the original image. w/o represents a homogeneous model without multimodal fusion. [Ti] represents a micro model, and [s] represents a small model. The small model has more layers and channels than the micro model.

It can be seen from data in Table 1 that, in comparison with other methods, the pixel accuracy, the average accuracy, and the mean intersection over union that are of the Mix method are improved. It may indicate that the expression capability of the data feature obtained through feature replacement can be improved by using the method according to embodiments of this application, so that an obtained computer vision result is more accurate.

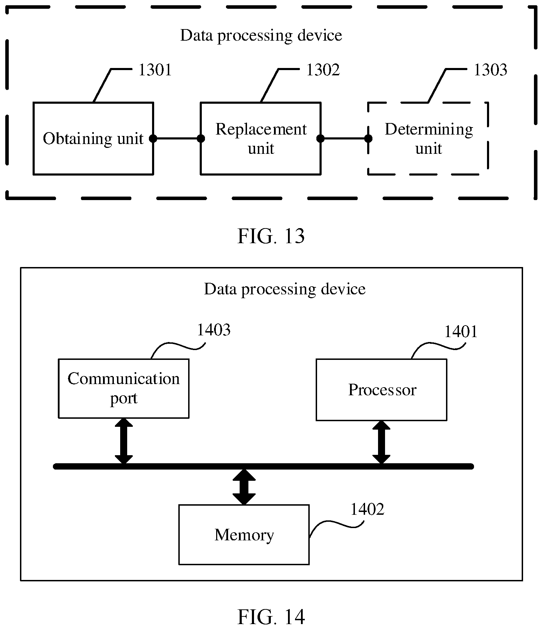

The foregoing describes the data processing method in embodiments of this application, and the following describes the data processing device in embodiments of this application. Refer to FIG. 13. An embodiment of a data processing device in embodiments of this application includes:

an obtaining unit 1301, configured to obtain first data and second data, where modalities of the first data and the second data are different, where
the obtaining unit 1301 is further configured to obtain a first feature set of the first data and a second feature set of the second data; and
a replacement unit 1302, configured to replace a first target feature in the first feature set with a second target feature in the second feature set, to obtain a third feature set, where the second target feature corresponds to the first target feature, where
the obtaining unit 1301 is configured to obtain a data feature based on the third feature set and the second feature set, where the data feature is used to implement a computer vision task.

Optionally, the data processing device may further include a determining unit 1303, configured to determine the second target feature based on a first score set and/or a second score set.

In an embodiment, operations performed by the units in the data processing device are similar to those described in embodiments shown in FIG. 1 to FIG. 12. Details are not described herein again.

In an embodiment, the replacement unit 1302 can efficiently fuse information of different modal data by replacing features between different modal data, so that the obtained data feature has a multimodal data feature, and an expression capability of the data feature is improved.

FIG. 14 is a schematic diagram of a structure of another data processing device according to this application. The data processing device may include a processor 1401, a memory 1402, and a communication port 1403. The processor 1401, the memory 1402, and the communication port 1403 are interconnected through a line. The memory 1402 stores program instructions and data.

The memory 1402 stores program instructions and data that correspond to the steps performed by the data processing device in the corresponding implementations shown in FIG. 1 to FIG. 12.

The processor 1401 is configured to perform the steps performed by the data processing device in any one of embodiments shown in FIG. 1 to FIG. 12.

The communication port 1403 may be configured to receive and send data, and is configured to perform steps related to obtaining, sending, and receiving in any one of embodiments shown in FIG. 1 to FIG. 12.

In an implementation, the data processing device may include more or fewer components than that shown in FIG. 14. This is merely an example for description, and is not limited in this application.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. All or some of the foregoing integrated units may be implemented by using software, hardware, firmware, or any combination thereof.

When the integrated units are implemented by using the software, all or a part of embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects that have a same attribute are described in embodiments of this application. In addition, terms "include", "have", and any other variations thereof are intended to cover non-exclusive inclusion, so that a process, method, system, product, or device that includes a series of units is not limited to those units, but may include other units not expressly listed or inherent to such a process, method, product, or device.

## Claims

1. A data processing method, wherein the method is used in a multimodal fusion scenario, and the method comprises:

   obtaining first data and second data, wherein modalities of the first data and the second data are different;
   obtaining a first feature set of the first data and a second feature set of the second data;
   replacing a first target feature in the first feature set with a second target feature in the second feature set, to obtain a third feature set, wherein the second target feature corresponds to the first target feature; and
   obtaining a data feature based on the third feature set and the second feature set, wherein the data feature is used to implement a computer vision task.

2. The method according to claim 1, wherein the obtaining a data feature based on the third feature set and the second feature set comprises:

   replacing a fourth target feature in the second feature set with a third target feature in the first feature set, to obtain a fourth feature set, wherein the third target feature corresponds to the fourth target feature; and
   obtaining the data feature based on the third feature set and the fourth feature set.

3. The method according to claim 1 or 2, wherein before the replacing a first target feature in the first feature set with a second target feature in the second feature set, the method further comprises:

   obtaining a first score set of the first feature set, wherein a first feature in the first feature set one-to-one corresponds to a first score in the first score set;
   obtaining a second score set of the second feature set, wherein a second feature in the second feature set one-to-one corresponds to a second score in the second score set; and
   determining the second target feature based on the first score set and/or the second score set.

4. The method according to claim 3, wherein the obtaining a first score set of the first feature set comprises:

   evaluating each feature in the first feature set by using a scoring network, to obtain the first score set, wherein the scoring network is used to evaluate feature importance; and
   the obtaining a second score set of the second feature set comprises:
   evaluating each feature in the second feature set by using the scoring network, to obtain the second score set.

5. The method according to claim 4, wherein output values of the scoring network conform to sparse distribution.

6. The method according to claim 3, wherein the obtaining a first score set of the first feature set comprises:

   performing a mathematical operation on each first feature in the first feature set, to obtain the first score set, wherein the mathematical operation is an operation performed based on each first feature, and the mathematical operation comprises a rank operation or a modulo operation; and
   the obtaining a second score set of the second feature set comprises:
   performing the mathematical operation on each second feature in the second feature set, to obtain the second score set.

7. The method according to any one of claims 1 to 6, wherein the obtaining a first feature set of the first data and a second feature set of the second data comprises:
obtaining the first feature set and the second feature set by using a neural network, wherein the neural network comprises an attention network, a multi-layer perceptron, a pooling layer, or a convolutional layer.

8. The method according to claim 7, wherein the obtaining the first feature set and the second feature set by using a neural network comprises:

splitting the first data to obtain a plurality of pieces of first subdata;
splitting the second data to obtain a plurality of pieces of second subdata; and
inputting the plurality of pieces of first subdata and the plurality of pieces of second subdata into the neural network, to obtain the first feature set and the second feature set.

9. The method according to any one of claims 1 to 8, wherein the replacing a first target feature in the first feature set with a second target feature in the second feature set comprises:
replacing the first target feature with the second target feature through residual location coding, wherein the residual location coding is used to determine a location of each feature in the first feature set and a location of each feature in the second feature set.

10. The method according to any one of claims 1 to 9, wherein the neural network further comprises a first network layer, and a structure of the first network layer is related to the neural network.

11. The method according to any one of claims 1 to 10, wherein the method further comprises:
inputting the data feature into a second network layer, to obtain a result of the computer vision task, wherein the second network layer is related to the computer vision task.

12. The method according to claim 11, wherein the computer vision task is a classification task, and the second network layer is a fully connected layer; or the computer vision task is a segmentation task or a detection task, and the second network layer is a convolutional neural network layer or an upsampling layer.

13. A data processing device, wherein the data processing device is used in a multimodal fusion scenario, and the data processing device comprises:

an obtaining unit, configured to obtain first data and second data, wherein modalities of the first data and the second data are different, wherein
the obtaining unit is further configured to obtain a first feature set of the first data and a second feature set of the second data; and
a replacement unit, configured to replace a first target feature in the first feature set with a second target feature in the second feature set, to obtain a third feature set, wherein the second target feature corresponds to the first target feature, wherein
the obtaining unit is configured to obtain a data feature based on the third feature set and the second feature set, wherein the data feature is used to implement a computer vision task.

14. The data processing device according to claim 13, wherein the obtaining unit is specifically configured to replace a fourth target feature in the second feature set with a third target feature in the first feature set, to obtain a fourth feature set, wherein the third target feature corresponds to the fourth target feature; and
the obtaining unit is specifically configured to obtain the data feature based on the third feature set and the fourth feature set.

15. The data processing device according to claim 13 or 14, wherein the obtaining unit is further configured to obtain a first score set of the first feature set, wherein a first feature in the first feature set one-to-one corresponds to a first score in the first score set;

the obtaining unit is further configured to obtain a second score set of the second feature set, wherein a second feature in the second feature set one-to-one corresponds to a second score in the second score set; and
the data processing device further comprises:
a determining unit, configured to determine the second target feature based on the first score set and/or the second score set.

**16.** The data processing device according to claim 15, wherein the obtaining unit is specifically configured to evaluate each feature in the first feature set by using a scoring network, to obtain the first score set, wherein the scoring network is used to evaluate feature importance; and
the obtaining unit is specifically configured to evaluate each feature in the second feature set by using the scoring network, to obtain the second score set.

**17.** The data processing device according to claim 16, wherein output values of the scoring network conform to sparse distribution.

**18.** The data processing device according to claim 15, wherein the obtaining unit is specifically configured to perform a mathematical operation on each first feature in the first feature set, to obtain the first score set, wherein the mathematical operation is an operation performed based on each first feature, and the mathematical operation comprises a rank operation or a modulo operation; and
the obtaining unit is specifically configured to perform the mathematical operation on each second feature in the second feature set, to obtain the second score set.

**19.** The data processing device according to any one of claims 13 to 18, wherein the obtaining unit is specifically configured to obtain the first feature set and the second feature set by using a neural network, wherein the neural network comprises an attention network, a multi-layer perceptron, a pooling layer, or a convolutional layer.

**20.** The data processing device according to claim 19, wherein the obtaining unit is specifically configured to split the first data to obtain a plurality of pieces of first subdata;

the obtaining unit is specifically configured to split the second data to obtain a plurality of pieces of second subdata; and
the obtaining unit is specifically configured to input the plurality of pieces of first subdata and the plurality of pieces of second subdata into the neural network, to obtain the first feature set and the second feature set.

**21.** The data processing device according to any one of claims 13 to 20, wherein the replacement unit is specifically configured to replace the first target feature with the second target feature through residual location coding, wherein the residual location coding is used to determine a location of each feature in the first feature set and a location of each feature in the second feature set.

**22.** The data processing device according to any one of claims 13 to 21, wherein the neural network further comprises a first network layer, and a structure of the first network layer is related to the neural network.

**23.** The data processing device according to any one of claims 13 to 22, wherein the obtaining unit is further configured to input the data feature into a second network layer, to obtain a result of the computer vision task, wherein the second network layer is related to the computer vision task.

**24.** The data processing device according to claim 23, wherein the computer vision task is a classification task, and the second network layer is a fully connected layer; or the computer vision task is a segmentation task or a detection task, and the second network layer is a convolutional neural network layer or an upsampling layer.

**25.** A data processing device, comprising a processor, wherein the processor is coupled to a memory, the memory is configured to store a program or instructions, and when the program or the instructions are executed by the processor, the data processing device is enabled to perform the method according to any one of claims 1 to 12.

**26.** A computer storage medium, comprising computer instructions, wherein when the computer instructions are run on a terminal device, the terminal device is enabled to perform the method according to any one of claims 1 to 12.

**27.** A computer program product, wherein when the computer program product runs on a computer, the computer is enabled to perform the method according to any one of claims 1 to 12.

EP 4 475 013 A1

100

FIG. 1

FIG. 2

Interaction interface

First data and second data

Search/Inference/
Decision-making

...

Data training/Machine
learning/Deep learning

Processor

Memory

Data processing device (server)

13:21

FIG. 3A

FIG. 3B

```
┌─────────────────────────────────────────────────────────────────┐
│                                                                   │  ⟋ 401
│              Obtain first data and second data                    │
│                                                                   │
└─────────────────────────────────────────────────────────────────┘
                                 │
                                 ▼
┌─────────────────────────────────────────────────────────────────┐
│                                                                   │  ⟋ 402
│  Obtain a first feature set of the first data and a second        │
│  feature set of the second data                                   │
└─────────────────────────────────────────────────────────────────┘
                                 │
                                 ▼
┌─────────────────────────────────────────────────────────────────┐
│                                                                   │  ⟋ 403
│  Replace a first target feature in the first feature set with     │
│  a second target feature in the second feature set                │
│                                                                   │
└─────────────────────────────────────────────────────────────────┘
                                 │
                                 ▼
┌─────────────────────────────────────────────────────────────────┐
│                                                                   │  ⟋ 404
│  Obtain a data feature based on a third feature set and the       │
│  second feature set                                               │
└─────────────────────────────────────────────────────────────────┘
```

FIG. 4

FIG. 5A

FIG. 5B

FIG. 6A

FIG. 6B

First subdata

Second subdata

First data

Second data

FIG. 7A

FIG. 7B

First subdata

First data

FIG. 8A

Second
subdata

Sampling

Second data

Sampling point

FIG. 8B

| Neural network | Neural network | Neural network |
|---|---|---|
| Attention network → First network layer | Multi-layer perceptron → First network layer | Pooling layer → First network layer |

FIG. 9

Neural network

Attention network → First network layer ----→

Feature set

FIG. 10A

Neural network

Attention network → First network layer ----→

Feature set

FIG. 10B

FIG. 11

FIG. 12

Data processing device

┌─ 1301          ┌─ 1302          ┌─ 1303

| Obtaining unit | Replacement unit | Determining unit |

FIG. 13

Data processing device

1403                    1401

| Communication port | | Processor |

| Memory | 1402

FIG. 14

## INTERNATIONAL SEARCH REPORT

| | International application No. |
| --- | --- |
| | **PCT/CN2023/077191** |

**A. CLASSIFICATION OF SUBJECT MATTER**

G06F18/25(2023.01)i

According to International Patent Classification (IPC) or to both national classification and IPC

**B. FIELDS SEARCHED**

Minimum documentation searched (classification system followed by classification symbols)

IPC:G06K,G06T,G06V,G06F18/-

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, CNKI: 多模态, 跨模态, RGB图, 深度图, 图片, 图像, 点云, 文本, 音频, 视频, 替换, 代替, 替代, 置换, 特征, 融合, 分割, 分类, 视觉, 图像生成, 检测, 识别, 华为, multi-modal, multimodal, cross-modal, cross modal, RGB, depth, image, picture, point cloud, text, audio, video, replace, feature, fusion, segment, classification, vision, image generation, detection, recognize, Huawei

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114897039 A (HUAWEI TECHNOLOGIES CO., LTD.) 12 August 2022 (2022-08-12) claims 1-27 | 1-27 |
| X | CN 112906797 A (NORTH CHINA ELECTRIC POWER UNIVERSITY) 04 June 2021 (2021-06-04) description, paragraphs 31-45, and figures 1 and 3 | 1-27 |
| A | CN 113673613 A (PING AN TECHNOLOGY (SHENZHEN) CO., LTD.) 19 November 2021 (2021-11-19) entire document | 1-27 |
| A | CN 113707309 A (PING AN TECHNOLOGY (SHENZHEN) CO., LTD.) 26 November 2021 (2021-11-26) entire document | 1-27 |
| A | US 2020357143 A1 (SRI INTERNATIONAL) 12 November 2020 (2020-11-12) entire document | 1-27 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **15 May 2023** | **16 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/077191**

| Patent document cited in search report | | | Publication date (day/month/year) | Patent family member(s) | | | Publication date (day/month/year) |
|---|---|---|---|---|---|---|---|
| CN | 114897039 | A | 12 August 2022 | None | | | |
| CN | 112906797 | A | 04 June 2021 | None | | | |
| CN | 113673613 | A | 19 November 2021 | None | | | |
| CN | 113707309 | A | 26 November 2021 | None | | | |
| US | 2020357143 | A1 | 12 November 2020 | US | 11361470 | B2 | 14 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210203516